(19) **Europäisches Patentamt**

**European Patent Office**

**Office européen des brevets**

(11) **EP 1 031 433 B1**

(12) **EUROPEAN PATENT SPECIFICATION**

(45) Date of publication and mention
of the grant of the patent:
**14.01.2004 Bulletin 2004/03**

(51) Int Cl.⁷: **B41M 5/28**, B41M 5/30,
B41M 5/00, B42D 15/10,
G09F 3/10, G06K 19/10,
G11B 5/00

(21) Application number: **00103919.7**

(22) Date of filing: **24.02.2000**

(54) **Thermosensitive recording card, image forming method, and apparatus for making the card**

Wärmeempfindliche Aufzeichnungskarte, Bildaufzeichnungsverfahren, und Vorrichtung zur
Herstellung der Karte

Carte pour l'enregistrement thermosensible, méthode pour former des images, et dispositif pour la
fabrication de la carte

(84) Designated Contracting States:
**AT BE CH CY DE DK ES FI FR GB GR IE IT LI LU
MC NL PT SE**

(30) Priority: **25.02.1999 JP 4832699**

(43) Date of publication of application:
**30.08.2000 Bulletin 2000/35**

(73) Proprietor: **Ricoh Company, Ltd.
Tokyo 143-8555 (JP)**

(72) Inventors:
• **Imahashi, Naoki, c/o Ricoh Company, Ltd.
Shizuo-Ken 410-8505 (JP)**
• **Nogiwa, Tohru, c/o Ricoh Company, Ltd.
Shizuoka-Ken 410-8505 (JP)**

• **Sugiyawa, Nobuyoshi, c/o Ricoh Company, Ltd.
Shizuoka-Ken 410-8505 (JP)**
• **Hotta, Yashihiko c/o Ricoh Company Ltd.
Shizuoka-ken 410-8505 (JP)**
• **Kutami, Atsushi c/o Ricoh Company Ltd.
Shizuoka-ken 410-8505 (JP)**
• **Amano, Tetsuya c/o Ricoh Company Ltd.
Shizuoka-ken 410-8505 (JP)**

(74) Representative: **Barz, Peter
Patentanwalt
Kaiserplatz 2
80803 München (DE)**

(56) References cited:
GB-A- 2 094 495      GB-A- 2 173 012
US-A- 4 370 370      US-A- 4 577 204
US-A- 5 643 851

EP 1 031 433 B1

**Description**

Field of the Invention

The present invention relates to a thermosensitive recording card medium which can form images utilizing the properties such that the transparency or color of the recording card medium changes depending on the temperature of the recording card medium. In particular, the present invention relates to a reversible thermosensitive recording card medium which can reversibly form and erase images utilizing the properties mentioned above. In addition, the present invention relates to an image forming method.

Discussion of the Background

Currently, considerable attention is placed on the thermosensitive recording media, in particular, on the reversible thermosensitive recording media in which images can be displayed temporarily and in addition the images can be erased when the images are not needed utilizing the properties such that the transparency or color of the recording media changes depending on the temperature of the recording media.

As an example of the reversible thermosensitive recording media, a reversible thermosensitive recording media is disclosed in Japanese Laid-Open Patent Publication No. 55-154198, which includes a low-molecular-weight organic material such as higher fatty acids dispersed in a resin matrix such as vinyl chloride-vinyl acetate copolymer and in which images are recorded and erased utilizing changes in transparency of the recording medium. In addition, reversible thermosensitive recording media have been disclosed in Japanese Laid-Open Patent Publications Nos. 5-124360 and 6-210954, which include a leuco dye and a color developer having a long-chain alkyl group and in which color images are reversibly recorded and erased. These recording media typically have a structure in which a reversible thermosensitive recording layer is formed on a substrate such as a polyester film having a thickness of from 180 $\mu$m to 250 $\mu$m. The recording media include a protective layer formed on the recording layer. In addition, the recording materials typically have a magnetic recording layer in their backside . These recording media are practically used as a card in which a part of information stored in the magnetic recording layer is displayed in the recording layer. For example, they are used as point cards, in which the information of the amounts of points given to a user proportionally to the total purchase amounts in a shop is displayed.

In recent years, a need is growing for thick cards having a thickness not less than 700 $\mu$m, such as credit cards, cash cards and IC cards, and in which a part of information stored in the magnetic recording layer is displayed in a portion of the cards. These thick cards have advantages such that they look to be relatively high-class compared to thin cards, and in addition they can be embossed. However, thick cards have a drawback in that it is hard to form images having good evenness thereon or clearly erase displayed images when the images are formed with a thermal head or erased with a ceramic heater or a heat roller. This is because the cards are thick and rigid.

Japanese Laid-Open Patent Publication No. 9-290583 discloses a method in which a reversible thermosensitive recording layer in which a low-molecular-weight organic material is dispersed in a resin matrix is transferred onto a card by peeling the recording layer from a releasing layer. In addition, the Publication discloses a method in which a reversible thermosensitive recording layer formed on one side of a thin polyester film, is adhered to a card using an adhesive layer formed on the other side of the film. However, the former method has a drawback in that when the recording layer is formed on the releasing layer, it is hard to form a uniform recording layer and therefore the images formed in the recording layer are also uneven. The latter method has a drawback in that adhesion of the film to the card is weak and therefore the film tends to be peeled from the card because the pressure in the hot-lamination process is relatively low (1 kg/cm$^2$) and there is a difference in level between the surface of the card and the surface of the film, which is also caused by the low hot-lamination pressure.

Japanese Laid-Open Patent Publication No. 10-76779 discloses a method in which a thin polyester film, on one side of which a reversible thermosensitive recording layer is formed and on the other side of which an adhesive layer is formed, is adhered to the entire surface of a card. However, this card has a drawback in that the film tends to be peeled from the card because the edge part of the card strikes various parts of an image forming apparatus. In addition, the card also has a drawback in that embosses, which are generally formed on credit cards, cannot be formed on the card.

Japanese Laid-Open Patent Publication No. 10-76780 discloses a method in which a reversible thermosensitive recording medium (label) , in which a reversible thermosensitive recording layer is formed on one side of a support and an adhesive layer is formed on the other side of the support, is temporarily adhered on a predetermined part of a card consisting of a center core and over sheets, and then embedded in the card by a hot press method while applying heat and pressure of 100 to 1000 kg/cm$^2$ thereto. This method can decrease the difference in level between the surface of the card and the surface of the recording medium, however, this card has a drawback in that the surface of the recording medium (i.e., the recording portion) tends to wave and therefore images having good evenness cannot be formed in the recording portion and displayed images cannot be erased clearly.

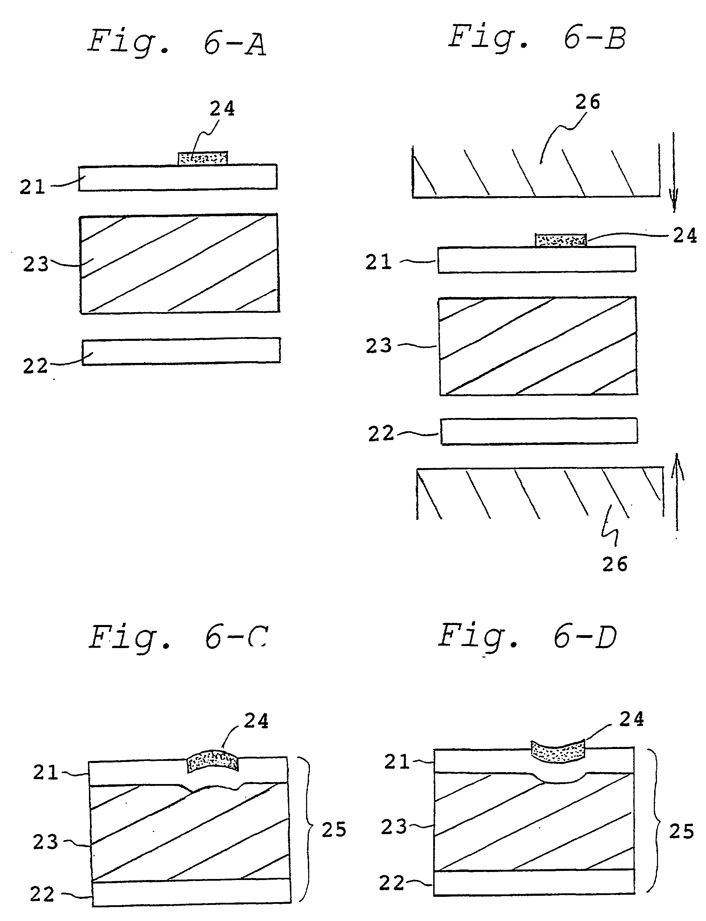

The wave is considered to be caused by the difference in shrinkage of the recording medium and the card when they are cooled after the hot press operation. Figs. 6-A to 6-D illustrate how the card medium is prepared. Namely, when an over sheet 21 on which a recording medium 24 is temporarily adhered, a center core 23, and another over sheet 22 are hot-pressed by a hot-press machine 26 as shown in Figs . 6-A and 6-B, a card 25 in which the recording medium 24 is embedded can be prepared. When this card is cooled to room temperature, the recording medium 24 (i.e. , the recording portion) is bent such that the center of the medium 24 is higher than each edge thereof as shown in Fig. 6-C if the shrinkage of the medium 24 is smaller than that of the card substrate.

Other thermosensitive recording card media comprising a card substrate and a thermosensitive recording portion formed on one side of the substrate are disclosed, e.g., in US-A-5643851, 4577204 and 4370370 and in GB-A-2173012 and 2094495.

However, as explained above, a need exists for a thermosensitive recording card medium in which images having good evenness can be formed and the images can be clearly erased and which has good durability without occurrence of peeling of the thermosensitive recording portion even upon use for a long period of time.

Accordingly an object of the present invention is to provide a thermosensitive recording card medium in which images having good evenness can be formed and which has good durability without occurrence of peeling of the thermosensitive recording portion even upon use for a long period of time.

Another object of the present invention is to provide a thermosensitive recording card medium in which images having good evenness can be formed and the images can be clearly erased and which has good durability without occurrence of peeling of the thermosensitive recording portion even upon use for a long period of time.

Yet another object of the present invention is to provide an image forming method in which images having good evenness can be formed in the thermosensitive recording card medium mentioned above even when the card medium is used for a long period of time.

Briefly these objects and other objects of the present invention as hereinafter will become more readily apparent can be attained by a thermosensitive recording card medium comprising a card substrate and a thermosensitive recording portion adhered by hot-lamination to at least one side of the card substrate, wherein the thermosensitive recording portion comprises a thermosensitive recording material which changes transparency and/or color upon application of heat to form an image in the recording portion, wherein the card has a deformation quantity not greater than 5 mm, and wherein the following relationship is satisfied:

$$|X| \leqq 0.075 \cdot Y^{1.4}$$

wherein X represents the waviness of the recording portion as defined in claim 1, and Y represents the deformation quantity of the card medium as defined in claim 1.

The difference in level between the surface of the thermosensitive recording portion and the surface of the card substrate is preferably not greater than 50 $\mu$m.

In addition, the recording portion and the card substrate are preferably adhered with an adhesive layer therebetween, and the adhesion of the recording portion and the card substrate is preferably not less than 300 g/cm.

The thermosensitive recording layer preferably includes a reversible thermosensitive recording material which changes its transparency or color upon application of heat.

In another aspect of the present invention, an image forming method including the steps of preparing the thermosensitive recording card medium mentioned above, and imagewise heating the thermosensitive recording portion to form images in the recording portion . The method may further include heating step to erase the images.

The imagewise heating step is preferably performed with a thermal head. The pressure of the thermal head is preferably from 2 to 100 g/mm. The heating step is preferably performed with a ceramic heater or a heat roller. The pressure of the ceramic heater is preferably from 0.1 to 100 g/mm.

The imagewise heating step and the heating step may be performed with a thermal head.

These and other objects, features and advantages of the present invention will become apparent upon application of the following description of the preferred embodiments of the present invention taken into conjunction with the accompanying drawings.

Various other objects, features and attendant advantages of the present invention will be more fully appreciated as the same becomes better understood from the detailed description when considered in connection with the accompanying drawings in which like reference characters designate like corresponding parts throughout and wherein:

Figs. 1-A, 1-B, 1-C and 1-D are schematic views illustrating embodiments of the thermosensitive recording card medium of the present invention;
Figs. 2-A and 2-B are schematic cross-sectional views illustrating embodiments of the thermosensitive recording medium for use as the recording portion of the thermosensitive recording card medium of the present invention;

Fig. 3 is a schematic view for explaining how the card deformation quantity is measured;

Fig. 4 is a schematic view for explaining how the surface waviness of the thermosensitive recording portion is measured;

Fig. 5-A is a schematic view illustrating how images are formed and erased according to the image forming method of the present invention;

Fig. 5-B is a schematic view illustrating an embodiment of an image forming apparatus useful in the present invention; and

Figs. 6-A, 6-B, 6-C and 6-D are schematic views for explaining how the thermosensitive recording card medium is prepared.

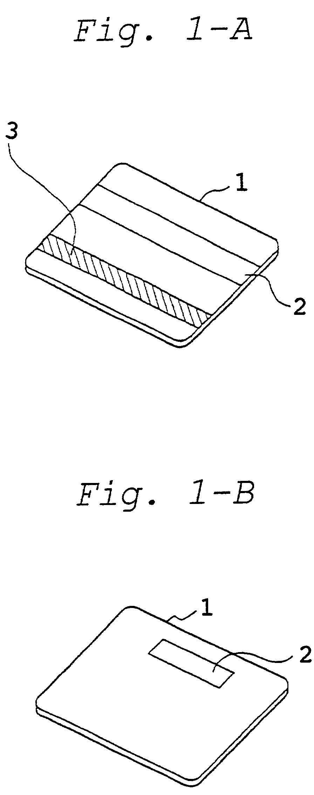

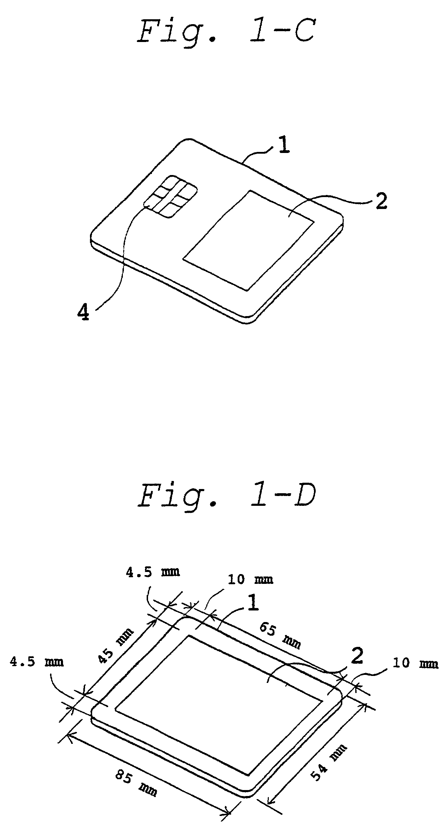

Figs . 1-A, 1-B and 1-C are schematic views illustrating embodiments of the thermosensitive recording card medium of the present invention. Fig. 1-A illustrates a card medium 1 including a belt-shaped thermosensitive recording portion 2, and a magnetic information storage portion 3 in which information can be stored and which is formed another area of one side of the card medium 1. The magnetic information storage portion 3 may be formed on the other side (i.e., backside) of the card medium 1.

Fig. 1-B illustrates another card medium 1' of the present invention in which a belt-shaped thermosensitive recording portion 2' is formed on one side of the card medium 1' such that the edges of the recording portion 2' do not extend to the edges of the card medium 1'. The card medium 1' is preferable because the recording portion 2' tends not to be peeled from the card medium 1' even when image forming and erasing operations are repeated many times.

Fig. 1-B illustrates yet another card medium 1" of the present invention in which a square thermosensitive recording portion 2" is formed on one side of the card medium 1" such that the edges of the recording portion 2" do not extend to the edges of the card medium 1" . In the card 1", an IC memory 4, in which information can be stored, is formed on another area of the card medium 1" . The IC memory 4 may be formed on the other side of the card medium 1".

With respect to the information storage portion, any know storage media in which information can be written and from which information can be read. Specific examples of the information storage media for use in the card medium of the present invention include magnetic recording media, IC storage media, optical storage media and combinations thereof.

As shown in Fig . 1-A, a magnetic recording medium (i.e., the magnetic information storage portion 3) is typically formed on a card substrate in a belt-shaped pattern. The magnetic information storage portion 3 is typically formed by transferring a belt-shaped magnetic medium, which is formed on a releasing layer of a thermal transfer medium, onto a card substrate by a thermal transfer method. The card, on which the magnetic recording medium is transferred, is then pressed while applying heat thereto, to embed the magnetic recording medium into the card substrate . Therefore the surface of the magnetic information storage portion 3 and the surface of the card 1 is on substantially the same plane.

Specific examples of the IC storage media include an IC module which includes an IC chip including a CPU and/or a memory, a circuit electrically connected with the IC chip, a connection terminal to be connected to the outside, and the like electric elements . This IC module is embedded in a recess formed in a card substrate such that the connection terminal faces up. The IC module is fixed to the card using an adhesive . The surface of the IC module (i. e., the surface of the connection terminal) and the surface of the card substrate is on substantially the same plane.

Specific examples of the optical storage media include a storage medium which utilizes changes in a phase transition property of metal alloys or changes in a magneto-optical property. The medium typically stores information using laser light, and the information can also be read out using laser light.

The card substrate typically consists of a center core and over sheets which sandwich the center core. Suitable materials for use as the center core include plastic sheets which are white-colored, colored, or transparent and on which images can be printable . Specific examples of the materials for use as the center core include films of resins such as polyvinyl chloride resins, polyester resins, polyolefin resins (e.g., polyethylene resins and polypropylene resins), polycarbonate resins, ABS resins and the like resins. The thickness of the center core is preferably from 400 µm to 1000 µm, and more preferably from 550 µm. to 700 µm.

Suitable materials for use as the over sheet include plastic sheets which may be white-colored, colored, or transparent and on which images can be printable. Specific examples of the materials for use as the over sheet include films of resins such as polyvinyl chloride resins, polyester resins, polyolefin resins (e.g., polyethylene resins and polypropylene resins) , polycarbonate resins, ABS resins and the like resins. The thickness of the over sheet is preferably from 50 µm to 200 µm, and more preferably from 50 µm to 150 µm.

If desired, images such pictures, characters and the like may be printed on any area of the center core (i.e., between the center core and the over sheets) and/or on the over sheets .

The thermosensitive recording medium for use in the thermosensitive recording card medium of the present invention is one which changes the transparency or color thereof upon application of heat. Specific examples thereof include thermosensitive recording media including a leuco dye and a color developer, thermal transfer receiving media on which a thermofusible ink or a sublimation dye can be transferred by a thermal transfer method, and reversible thermosensitive recording media. Among these media, the reversible thermosensitive recording media are preferably used.

Suitable reversible thermosensitive recording media for use in the thermosensitive recording portion 2 (2' or 2") include reversible thermosensitive recording media which can reversibly achieve two or more states, in which color and/or transparency thereof are different from each other state, upon application of heat, and can maintain the states at room temperature if energy is not further applied thereto. Specific examples thereof include a medium which includes two or more polymers and which can achieve a transparent state and an opaque state utilizing changes in compatibility of the polymers (Japanese Laid-Open patent Publication No. 61-258853), and a medium which includes a high-molecular-weight liquid crystal and which achieves two different states utilizing phase changes of the liquid crystal (Japanese Laid-Open patent Publication No. 62-66990). In addition, a medium, which can achieve a first colored state when heated at a first specific temperature higher than room temperature and can achieve a second colored state when heated at a second specific temperature higher than the first specific temperature and then cooled, is also exemplified as the reversible thermosensitive recording medium for use in the reversible thermosensitive recording portion.

In particular, the media which can achieve different states in transparency, turbidity, color or the like property after heated at a first specific temperature and a second specific temperature can be preferably used as the reversible thermosensitive recording medium, because temperature can be easily controlled. Specific examples thereof include a medium in which a low-molecular-weight compound having a long chain, such as fatty acids, is dispersed in a resin and which can achieve a transparent state when heated at a first specific temperature, and can achieve an opaque state when heated at a second specific temperature and then cooled (Japanese Laid-Open patent Publication No. 55-154198). Japanese Laid-Open patent Publication No. 3-169590 discloses a medium which includes a resin and a fatty acid or the like and which can achieve an opaque state when heated at a first specific temperature, and can achieve a transparent state when heated at a second specific temperature. Japanese Laid-Open patent Publications Nos. 5-124360, 5-294063 and 6-171225 have disclosed media which include a leuco dye and a color developer having along chain alkyl group and which can achieve a colored state such as black, red, blue or the like when heated at a second specific temperature, and can achieve a non-colored state when heated at a first specific temperature. Japanese Laid-Open patent Publications Nos. 2-188293 and 2-188294 have disclosed media which include a leuco dye and an amphoteric color developer and which can achieve a colored state when heated at a first specific temperature, and can achieve a non-colored state when heated at a second specific temperature.

Among these media, the medium in which a low-molecular-weight organic material such as fatty acids is dispersed in a resin and which achieves a transparent state when heated at a first specific temperature and an opaque state when heated at a second specific temperature (this material is hereinafter referred to as transparent-opaque type recording medium) utilizing physical changes of the combination of the organic material and the resin. Since the changes are physical changes, the medium has good preservability, thermosensitivity and durability, and is preferably used in the present invention.

In addition, the media which use a leuco dye and which can achieve a colored state such as a black, red and blue colored state (this media are hereinafter referred to as leuco dye type recording media) can produce images having good contrast. In addition, among these media using a leuco dye, a medium further including a color developer having a long chain alkyl group has an advantage in that the temperatures of color formation and color erasure can be easily controlled, and therefore the medium is also preferably used in the present invention.

Hereinafter the transparent-opaque type recording medium will be described in detail.

Suitable resins for use as the resin in the transparent-opaque type recording medium include resins which have a glass transition temperature of, preferably, from 50 °C to 100 °C and more preferably from 60 °C to 80 °C. Specific examples of the resins include polyvinyl chloride resins such as polyvinyl chloride, vinyl chloride-vinyl acetate copolymers, vinyl chloride-vinyl acetate-vinyl alcohol copolymers, vinyl chloride-vinyl acetate-maleic acid copolymers, and vinyl chloride-acrylate copolymers; polyvinylidene chloride resins such as polyvinylidene chloride, polyvinylidene chloride-polyvinyl chloride copolymers, and polyvinylidene chloride-acrylonitrile copolymers; polyester resins; polyamide resins; poly(meth)acrylate resins, and acrylate-methacrylate copolymers; and other resins such as silicone resins, polyethylene resins, polypropylene resins, polystyrene resins, polyacrylamide resins, polyvinyl pyrrolidone resins, natural rubbers, polyvinyl alcohol resins, polyacrolein resins, polycarbonate resins, and the like resins. These resins are used alone or in combination.

In order to improve durability of the recording medium, the resin is preferably crosslinked upon application of heat, ultraviolet light or electron beams. When resins are crosslinked, crosslinking agents may be used. For example, when a resin having a hydroxy group such as polyvinyl alcohol copolymers is crosslinked upon application of heat, a compound having an isocyanate group is combined with the resin to crosslink the resin. When ultraviolet light or electron beam is used to crosslink a resin, (meth)acrylic monomers, and (meth)acrylic oligomers can be used together with the resin. However, the method for crosslinking a resin is not limited thereto.

With respect to the low-molecular-weight organic materials, any organic materials which can become particulate in a recording layer (i.e., in a resin layer) can be used, and organic materials having a melting point of from 30 °C to 200 °C, and preferably from 50 °C to 200 °C, are preferably used. Suitable materials for use as the low-molecular-weight organic materials include compounds including a long chain hydrocarbon group. The carbon number of the hydrocarbon group is preferably from 6 to 50, more preferably from 8 to 40, and even more preferably from 10 to 30. The carbon atoms may be separately present in 2 or more places in a molecule . Namely, the carbon number mentioned above means the total carbon number in a molecule.

It is preferable to use a combination of a low-molecular-weight organic material (1) having a relatively low melting point and another low-molecular-weight organic material (2) having a relatively high melting point in the recording layer. The difference between the organic materials (1) and (2) in melting point is preferably not less than 30 ° C, more preferably not less than 40 °C, and even more preferably not less than 50 °C. By using organic materials having different melting points, the temperature range in which the resultant recording material is transparent can be widened.

The melting point of the organic materials (1) is preferably from 50 °C to not less than 100 °C, more preferably from 70 °C to not less than 100 °C, and even more preferably from 80 °C to not less than 100 °C, to obtain a recording material having good resistance to heat.

The melting point of the organic materials (2) is preferably from 100 °C to 200 °C, more preferably from 120 °C to 180 °C, and even more preferably from 130 °C to 170 °C. It is especially preferable for the melting point of the organic materials (2) to be from 140 °C to 170 °C. When the melting point of the organic materials (2) is increased in the range mentioned above, i.e., the difference between the materials (1) and (2) in melting point increase, the range in which the resultant recording medium is transparent can be widened, and therefore the resultant recording medium can easily achieve a tansparent state even when a processing speed is increased. In contrast, when the melting point of the organic materials (2) is decreased in the range mentioned above, thermosensitivity of the resultant recording medium can be enhanced.

Specific examples of the organic materials (1) include fatty acid esters, dibasic acid esters, di-fatty acid esters of polyhydric alcohol, and ketones, alkylamides and alkyl ureas having a higher alkyl group, but are not limited thereto . These compounds are used alone or in combination.

Specific examples of the organic materials (2) include saturated aliphatic dicarboxylic acids, semicarbazone delivered from ketones having a higher alkyl group, $\alpha$-phosphonofatty acids, fatty acid amides, fatty acid bisamides, alicyclic dicarboxylic acids, and fatty acids having a steroid skeleton, but are not limited thereto. These materials are used alone or in combination.

The mixing ratio of the organic material (1) to the organic material (2) is preferably from 95:5 to 5:95, more preferably from 90:10 to 10:90, and even more preferably from 80:20 to 20:80.

The ratio of the low-molecular-weight organic material to the resin in the reversible thermosensitive recording layer is preferably from 2: 1 to 1:16, more preferably from 1:2 to 1:8, and even more preferably from 1: 2 to 1: 4 by weight . When the content of the resin is too low, it is impossible to form a recording layer in which the low-molecular-weight organic material is retained in the resin. On the contrary, when the content of the resin is too high, it is impossible to make the resultant recording layer achieve an opaque state.

The reversible thermosensitive recording layer may include additives such as surfactants, plasticizers and the like to easily form a transparent image. Specific examples of the additives are disclosed in Japanese Laid-Open Patent Publications Nos. 63-104879, 63-178079, etc. However, the additives for use in the present invention are not limited thereto.

Next, the leuco dye type reversible thermosensitive recording medium will be explained in detail. The recording layer of this recording medium is a layer in which a leuco dye and a color developer are dispersed in a binder resin.

Suitable leuco dyes for use in the present invention can be selected from triphenylmethanephthalide type compounds, fluoran type compounds, phenothiazine type compounds, leuco auramine type compounds, indolinophthalide type compounds and the like.

Suitable color developers which can color leuco dyes include compounds including a combination of a structure having an ability of coloring leuco dyes, such as a phenolic hydroxy group, a carboxyl group, a phosphoric group and the like group; and a structure capable of controlling an intermolecular cohesive force, such as hydrocarbon groups having a long chain. The connection part of the structures may include a divalent group including a hetero atom. In addition, the hydrocarbon group having a long chain may also include a divalent group including a hetero atom, or an aromatic group. Specific examples thereof include known compounds disclosed in Japanese Laid-Open Patent Publication No. 5-124360, etc. The melting point of the color developer is preferably from 120 °C to 200 °C, and more preferably from 140 °C to 180 °C.

The reversible thermosensitive recording medium can be formed on an area of a card substrate, for example, by adhering a label of the recording medium, in which a recording layer is formed on one side of a support and an adhesive layer is also formed on the other side of the support, to a card substrate with the adhesive layer therebetween. The recording material is adhered to the card substrate with a hot-laminate type adhesive because good adhesion can be obtained. The temperature of the hot-lamination operation is preferably from 60 °C to 200 °C, more preferably from 70 °C to 180 °C, and even more preferably from 80 °C to 180 °C. When the hot-lamination temperature is too low, the recording label tends to be peeled from the card substrate. When the temperature is too high, the card medium tends to be deformed, resulting in formation of uneven images when images are formed in the recording label.

The temperature of the hot-lamination operation is preferably in the image erasing temperature range of the reversible thermosensitive recording medium used, at a temperature in which recorded images in the recording medium can be erased. Namely, when a transparent-opaque type recording medium is used in the recording layer, the hot-lamination temperature is preferably the first specific temperature (i.e., the image erasing temperature) at which the recording material achieves a transparent state. When a leuco dye type recording medium is used in the recording layer, the hot-lamination temperature is preferably the first specific temperature (i.e., the image erasing temperature) at which color images in the recording medium can be erased. When the reversible thermosensitive recording label medium is adhered at the image erasing temperature, the recording layer achieves a non-image state. Therefore, when a reversible thermosensitive recording card medium is manufactured, an image erasing process, in which the recording portion in the card is set to be an initial state (i.e., a non-image state), is not needed.

The softening point of the hot-lamination type adhesive layer is preferably not less than 50 °C, more preferably not less than 60 °C, and even more preferably not less than 70 °C. When the softening point of the adhesive layer is not greater than 40 °C, the adhesive layer tends to transfer to the recording layer if the label is preserved as a roll shape in which the adhesive layer contacts the recording layer before being transferred onto the card substrate. If the recording layer, to which the adhesive layer is adhered, is transferred on a card substrate to form a recording portion, images having good evenness cannot be formed in the recording portion.

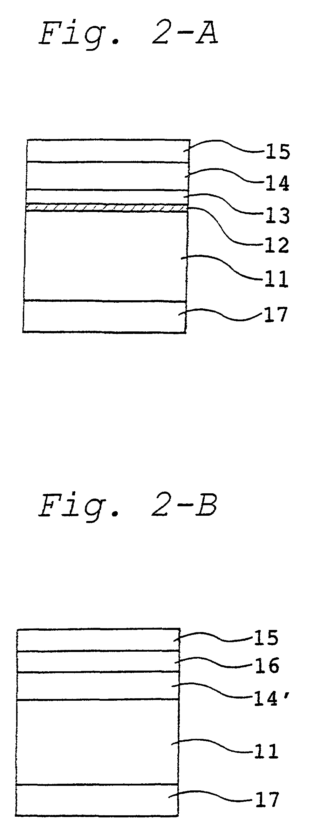

Fig. 2-A is a schematic view illustrating the cross section of an embodiment of the transparent-opaque type reversible thermosensitive recording medium for use in the present invention. In Fig. 2-A, a light reflection layer 12, an adhesive layer 13, a reversible thermosensitive recording layer 14, and a protective layer 15 are formed on one side of a support 11 in this order. On the other side of the substrate, a second adhesive layer 17, which is used for adhering the recording medium on a card substrate, is formed.

Suitable materials for use as the support 11 include plastic films, which are relatively thin and which have good mechanical strength and flexibility, such as polyester films, polyethylene films, polypropylene films, and the like plastic films. The thickness thereof is preferable from 12 µm to 100 µm, and more preferably from 25 µm to 50 µm.

The light reflection layer 12 can enhance the contrast of images formed by transparent areas and opaque areas of the reversible thermosensitive recording layer 14. In addition, the light reflection layer 12 also conceals the layers below the light reflection layer 12. The light reflection layer 12 can be formed by applying a metal such as Al, Cr, Sn, Ni, Cu or the like by any known method such as vacuum deposition methods, sputtering methods, ion plating methods and the like methods . The thickness of the light reflection layer 12 is from 20 to 200 nm (200 to 2000 Å).

The adhesive layer 13 is optionally formed to securely adhere the light reflection layer 12 to the reversible thermosensitive recording layer 14. The adhesive layer 13 is prepared by forming a resin layer by a printing method, a coating method or the like. The thickness of the adhesive layer 13 is preferably from 0.1 µm to 10 µm. Specific examples of the resin for use in the adhesive layer 13 include known thermoplastic resins, thermosetting resins, ultraviolet crosslinking resins, and electron beam crosslinking resins, such as polyvinyl chloride resins, vinyl chloride-vinyl acetate copolymers, polyester resins, polyethylene resins, polyurethane resins, acrylic resins, epoxy resins, and the like resins.

The protective layer 15 is formed to protect the recording layer 14. The protective layer 15 is formed by applying one or more known resins such as thermoplastic resins, thermosetting resins, ultraviolet crosslinking resins, and electron beam crosslinking resins, e.g., acrylic resins, urethane resins, epoxy resins and the like resins. The protective layer 15 is formed by any known method such as printing methods, coating methods and the like methods, and the thickness of the protective layer 15 is preferably from 1 µm to 10 µm. The protective layer 15 may include a crosslinking agent such as isocyanates, and/or a filler such as organic fillers and inorganic fillers to enhance the heat resistance of the protective layer 15 . The crosslinking agents and fillers are included therein in an amount such that they do not degrade the transparency of the transparent state of the recording layer 14.

Specific examples of the materials for use as the second adhesive layer 17 include urea resins, melamine resins, phenolic resins, epoxy resins, vinyl acetate resins, vinyl acetate-acrylic copolymers, ethylene-vinyl acetate copolymers, acrylic resins, polyvinyl ether resins, vinyl chloride-vinyl acetate copolymers, polystyrene resins, polyester resins, polyurethane resins, polyamide resins, chlorinated polyolefin resins, polyvinyl butyral resins, acrylic acid esters copolymers, methacrylic acid esters copolymers, natural rubbers, cyanoacrylate resins, silicone resins and the like resins, but are not limited thereto. The thickness thereof is preferably from 0.5 µm to 15 µm, and more preferably from 2 µm to 12 µm.

Fig. 2-B is a schematic view illustrating the cross section of an embodiment of the label-shaped leuco dye type reversible thermosensitive recording medium of the present invention. In Fig.2-B, a reversible thermosensitive recording layer 14', an intermediate layer 16 and a protective layer 15 are formed on one side of a substrate 11 in this order. On the other side of the substrate, a second adhesive layer 17, which is used for adhering the recording medium on a card, is formed.

The intermediate layer 16 is formed if necessary, and known resins such as thermoplastic resins, thermosetting resins, ultraviolet crosslinking resins, and electron beam crosslinking resins can be used therefor. The intermediate layer 6 may include an ultraviolet absorbent to prevent the leuco dye included in the recording layer 14' from being decomposed by ultraviolet light. The thickness thereof is preferably from 0.5 $\mu$m to 5 $\mu$m.

The protective layer 15, and the second adhesive layer 17 can be formed in the same way as mentioned above in the transparent-opaque type recording medium.

When a reversible thermosensitive recording label medium and a card substrate are adhered with a hot-lamination adhesive, they are pressed with a pressing apparatus to embed the recording medium into the card substrate. The pressure is preferably from 10 kg/cm$^2$ to 50 kg/cm$^2$. When the pressure is too low, the label cannot be embedded into the card substrate . On the contrary, when the pressure is too high, deformation is generated in the resultant card, i.e., the surface of the resultant card becomes uneven, and thereby images having good evenness cannot be formed. The difference in level between the surface of the card and the surface of the recording label is preferably not greater than 50 $\mu$m, more preferably not greater than 40 $\mu$m, and even more preferably not greater than 30 $\mu$m. When this level difference is too large, the label tends to be peeled from the card substrate when image formation and erasure operations are repeated. The level difference is measured by a surface analyzer.

The adhesion between the card substrate and the recording label is preferably not less than 300 g/cm, more preferably not less than 500 g/cm, and even more preferably not less than 700 g/cm. It is especially preferable that the adhesion is not less than 1000 g/cm. When the adhesion therebetween is too small, the recording label tends to be peeled from the card. The adhesion is measured using a surface tester (manufactured by HEIDON) under the conditions of 150 mm/min in peeling speed and 180 $^\circ$ in peeling angle.

The deformation quantity of a card relates to the rigidity of the card. Namely, the less the deformation quantity of a card, the more rigid the card. The deformation quantity (Y) is measured by the following method:

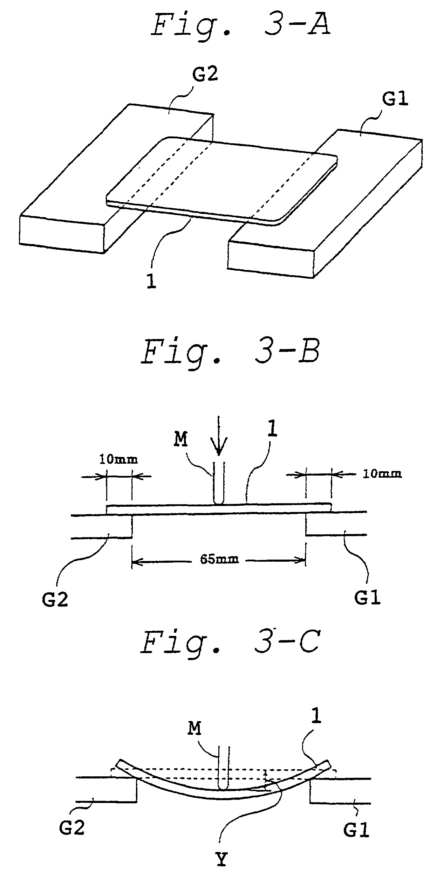

   (1) as shown in Figs. 3-A and 3-B, two glass plates G1 and G2having a thickness of about 10 mm are set so as to be parallel to each other with a space of about 65 mm therebetween;
   (2) a card 1 of 85 mm x 54 mm in size is set on the glass plates G1 and G2 such that each of the shorter sides (54 mm side) of the card 1 are parallel to the glass plates G1 and G2 and each edge part of the card 1 contacts the respective glass plate by a length of 10 mm;
   (3) as shown in Fig. 3-B, a force of 1 N is applied with a metal rod M or the like to the center part of the card 1 in a direction perpendicular to the card; and
   (4) the variation of the card 1 (i.e., Y) is defined as the deformation quantity of the card, as shown in Fig. 3-C.

The contact area at which the metal rod M contacts the card 1 is preferably from 2 to 3 mm in diameter. The metal rod M can be replaced with a tension gauge having a metal rod, and the like.

The deformation quantity of a card depends on the material and thickness of the card. When the deformation quantity of a card is not less than 20 mm, images having good evenness can be recorded and images can be clearly erased with a thermal head or a ceramic heater while a pressure is applied to the card even if the card has a large waviness. Card substrates such as polyester films having a thickness of from 180 $\mu$m to 250 $\mu$m have a deformation quantity of not less than 20 mm.

When a card has a deformation quantity not greater than 5 mm and the recording medium in the card has a large waviness, images having good evenness cannot be formed in the recording layer or images cannot be clearly erased because the card cannot uniformly contact a heating device such as a thermal head, a ceramic heater or the like even when a pressure is applied to the card with the heating device.

The waviness of the recording layer means the degree of asperities of the surface of the recording layer, and is measured by the following method:

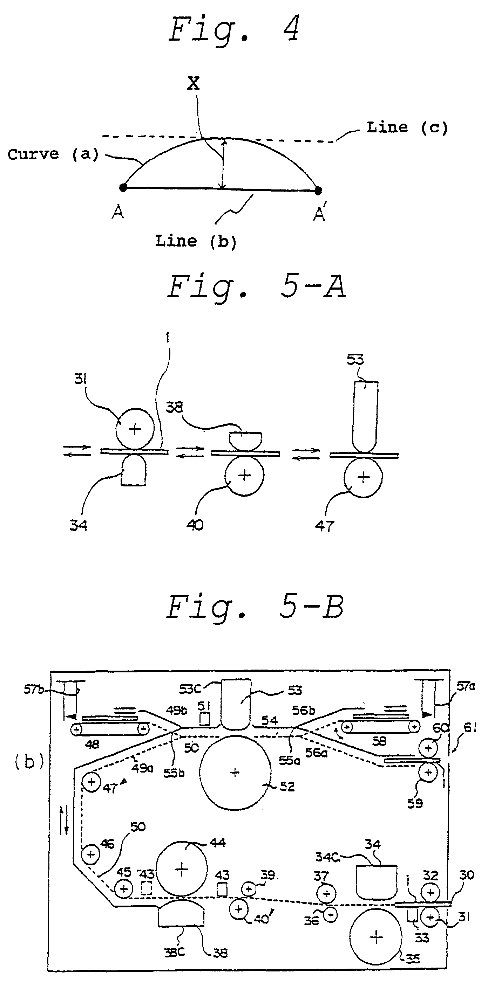

   (1) a surface of a card in which a reversible thermosensitive recording medium is embedded is scanned with a surface analyzer (tradenamed as SURFCOM, manufactured by Tokyo Seimitsu Co . , Ltd.) such that the scanning length is 10 mm and the scanning direction is parallel to the short sides of the card;
   (2) as shown in Fig. 4, the start point A and the end point A' of the obtained curve (a curve (a) in Fig. 4) are connected with a straight line (b);
   (3) in Fig. 4, a dotted straight line (c) is drawn so that the line (c) is parallel to the line (b) and is a tangent line of the curve (a); and

(4) the distance between the lines (b) and (c) is defined as the waviness (X) of the card.

When the curve (a) has a shape in which the center is higher than the start point and the end point (i.e., like a curve as shown in Fig. 6-C), the waviness has a positive value, and when the curve (a) has a shape in which the center is lower than the start point and the end point (i.e., like a curve as shown in Fig. 6-D), the waviness has a negative value.

In the present invention, the waviness of the recording material is preferably not greater than 70 μm, more preferably not greater than 60 μm, and even more preferably not greater than 50 μm. When the waviness is too large, images having good evenness cannot be formed in the recording medium, and images formed in the recording medium cannot be clearly erased.

The waviness (X) of the recording medium in a card and the deformation quantity (Y) of the card preferably satisfy the following relationship:

$$| X | \leqq 0.075 \cdot Y^{1.4} \qquad (1)$$

The scanning length for determining the waviness is generally 10 mm. When the length in the main scanning direction (i.e., the recording width) of the thermal head used as an image forming device (i.e., an imagewise heating device) is less than 10 mm, the scanning length is set so as to be equal to the maximum recording width of the thermal head.

The inequality (1) implies that when the deformation quantity of a card decreases, the waviness of a recording portion of the card should be decreased. When the waviness is out of the range represented by inequality (1), good images cannot be recorded in the recording portion and images in the recording portion cannot be clearly erased.

In order to make a recording portion having a waviness not greater than 70 μm or satisfying inequality (1), the following methods can be used:

(1) a method to control the temperature and/or the pressure in the hot-lamination operation in which the recording medium is embedded into the card;
(2) a method in which the heat shrinkage of the support of the recording medium is made so as to be close to that of the card substrate; and
(3) a method in which the thickness of the card substrate is thickened.

The temperature and the pressure in the hot-lamination operation are preferably from 60 °C to 200 °C, and from 10 kg/cm$^2$ to 50 kg/cm$^2$, respectively. The difference in heat shrinkage between the substrate of the recording material and the card substrate is preferably within ±30% % at the temperature of the hot-lamination operation. When the thickness of the card substrate is preferably from 750 μm to 1000 μm.

The surface roughness of the reversible thermosensitive recording portion is from 0.05 μm to 5 μm. in Arithmetical Mean Deviation of the Profile Ra measured based on JIS B 0601. When the roughness is too large, the thermosensitivity of the recording portion deteriorates, and contrast of recorded images deteriorates in the transparent-opaque type recording medium. When the roughness is too small, images having good evenness cannot be formed or images cannot clearly erased when dust or the like is adhered on the surface of the recording portion.

The ratio of the recording area to the card is from 5 % to 90 %, and more preferably from 10 % to 70 % by area. When this ratio is too small, the recognizability of the recorded images deteriorates . When the ratio is too large, there is no space in the card in which embosses are formed.

The ratio of the thickness of the recording portion to that of the card is preferably from 1 % to 15 %, and more preferably from 2 % to 10 % . When the ratio is too small, the recording portion tends to be wrinkled. When the ratio is too large, the waviness of the recording portion tends to become large.

Suitable image forming devices (imagewise heating devices) useful for recording images in the thermosensitive recording card of the present invention include thermal heads, laser emitting devices, and the like recording devices which can imagewise heat the recording portion of the card. When the recording portion is constituted of reversible thermosensitive recording medium, hot stamps, ceramic heaters, heat rollers, devices blowing hot air, thermal heads, laser and the like can be used as an image erasing device (a heating device). Among these image erasing devices, ceramic heaters are preferably used. By using ceramic heaters, image forming/erasing apparatus can be miniaturized, and recorded images can be stably erased. The temperature of the ceramic heaters is preferably not lower than 110 °C, more preferably not lower than 112 °C, and even more preferably not lower than 115 °C.

Thermal heads are preferably used as the image forming device and ceramic heaters are preferably used as the image erasing device.

The pressure applied to the recording portion by a thermal head is preferably from 2 g/mm to 100 g/mm, more preferably from 5 g/mm to 80 g/mm, and even more preferably from 10 g/mm to 50 g/mm. When the pressure is too low, images having good evenness cannot be recorded. When the pressure is to high, the life of the thermal head is shortened.

The pressure applied to the recording portion by a ceramic heater is preferably from 0.1 g/mm to 100 g/mm, more preferably from 1 g/mm to 80 g/mm, and even more preferably from 5 g/mm to 50 g/mm. When the pressure is too low, images cannot be clearly erased. When the pressure is to high, the life of the ceramic heater is shortened.

When a thermal head is used as an image forming device, the image forming/erasing apparatus can further miniaturized and the power consumption of the apparatus can be decreased. In addition, handy image forming/erasing apparatus, which can be operated by a battery, can be provided. When a thermal head is used as an image forming/ erasing device, the image forming/erasing apparatus can further be miniaturized. When image formation and erasure are performed with a thermal head, either a method in which former images are all erased and then new images are formed, or a method (an overwriting method) in which new images are formed while former images are being erased by changing heat energy of the heat elements of the thermal head may be used. New images can be rapidly formed by the overwrite method.

When the thermosensitive recording card medium having a thermosensitive recording portion and an information storage portion is used, it is needed for an image forming apparatus to include an information reading device and an information rewriting device.

Fig. 5-A is a rough schematic view illustrating an image forming apparatus useful in the present invention. In Fig. 5-A, at first information is recorded in a magnetic recording portion of a card 1 is read or the information stored therein is erased by a magnetic head 34 while the card is fed by a feeding roller 31, and a reversible thermosensitive recording portion of the card 1 is heated with a ceramic heater 38 at a position between the ceramic heater 38 and a feeding roller 40 while the card is fed by the feeding roller 40. Then new information is recorded in the recording portion with a thermal head 53 at a nip of the thermal head 53 and a feeding roller 47 according to the information previously read by the magnetic head 34. The card 1 is fed back and discharged from the apparatus. New information may be recorded in the magnetic recording portion with the magnetic head 34 before discharging from the apparatus . The preferable range of the temperature of the ceramic heater 38 is mentioned before. The magnetic recording operation may be performed before or after the image erasing operation. In addition, the card, in which new images have been recorded may be fed back and subjected to another image forming treatment using the thermal head 53 and/or another image erasing treatment using the ceramic heater 38, if desired. By performing such treatments, previously recorded images can be perfectly erased, or images having different colors or contrasts can be formed.

Fig. 5-B is a schematic view illustrating an embodiment of the image forming/erasing apparatus. In Fig. 5-B, a reversible thermosensitive recording card 1 inserted from an entrance 30 is passed through a passage 50 illustrated by a dotted line . The card can be fed back through the passage 50. The position of the card 1 is fed by a feeding roller 31 and a guide roller 32, and the card 1 is recognized by a sensor 33. Magnetic recording or erasing is performed between a magnetic head 34, which is controlled by a controller 34c, and a platen roller 35. The card 1 is fed by feeding rollers 37 and 40' and guide rollers 36 and 39. The fed card 1 is recognized by a sensor 43, and then heated by a ceramic heater 38, which is controlled by a controller 38c, at a position between the ceramic heater 38 and a platen roller 44, to erase images previously recorded in the card 1.

Then the card 1 is further fed through the passage 50 by feeding rollers 45, 46 and 47'. The card 1 is recognized by a sensor 51, and then imagewise heated by a thermal head 53, which is controlled by a controller 53c, at a position between the thermal head 53 and a platen roller 52, to record new images in the card 1. The card 1 is discharged from an exit 61 by a pair of a feeding roller 59 and a guide roller 60 after passing through a passage 56a. The ceramic heater 38 is controlled so that the temperature thereof is in the preferable range mentioned before.

If desired, the path of the card 1 may be changed by a feeding path changing device 55a such that the card 1 is fed through a passage 56b. When the fed card 1, which is fed by a feeding belt 58, presses a limit switch 57a, the feeding belt 58 is reversely moved so that the card 1 is fed back. The card 1 is heated again by the thermal head 53 at the nip of the thermal head 53 and the platen roller 52 . Then the card 1 is fed through a passage 49b by changing a feeding path changing device 55b. When the card 1 is conveyed by a feeding belt 48 and presses a limit switch 57b, the feeding belt 48 is moved in reverse to feed the card 1 through the passage 56a and the pair of the guide roller 60 and the feeding roller 59, resulting in discharge of the card 1.

Branched passages and feeding path changing devices can be provided at both sides of the ceramic heater 38. In this case, the sensor 43 is preferably provided at a position between the platen roller 44 and the feeding roller 45.

As mentioned above, an information storage portion, which is constituted of a medium into which information can be written and from which information can be read, is provided in the reversible thermosensitive recording card of the present invention, and at least a part of the information stored in the medium is displayed in the reversible thermosensitive recording portion. For example, in cards including value information such as points and premiums, the newest value is typically recorded in the thermosensitive recording portion of the cards .

In addition, the information to be recorded in the thermosensitive recording portion is not limited to that stored in the information storage portion. For example, when all or a part of information stored in the information storage portion is erased or rewritten, the history of information erasure or rewrite can be recorded in the thermosensitive recording portion by recording the identification code of the erasure or rewrite.

Hereinbefore, the reversible thermosensitive recording medium has been explained as the thermosensitive recording portion, however, the thermosensitive recording portion is not limited thereto and an irreversible thermosensitive recording medium can also be used for the thermosensitive recording portion.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

## Examples

## Example 1

(Formation of light reflection layer)

Aluminum was deposited on one side of a polyester film having a thickness of 38 μm such that the thickness thereof was 60 nm (600 Å). Thus a light reflection layer was prepared.

(Formation of adhesive layer)

The following components were mixed to prepare an adhesive layer coating liquid.

| | |
|---|---|
| Vinyl chloride-vinyl acetate-phosphoric acid estercopolymer (Tradenamed as Denka® Vinyl #1000P, manufactured by Denki Kagaku Kogyo K.K.) | 10 |
| Tetrahydrofuran | 80 |

The adhesive layer coating liquid was coated on the light reflection layer, and dried at 130 °C. Thus, an adhesive layer of about 1 μm thick was formed.

(Formation of reversible thermosensitive recording layer)

The.following components were mixed to prepare a reversible thermosensitive recording layer coating liquid.

| | |
|---|---|
| Behenic acid (manufactured by NOF Corp.) | 5 |
| Eiconsane diccalboxylic acid (tradenamed as SL-20-99, manufactured by OKAMURA OIL MILL. Ltd.) | 5 |
| Vinyl chloride resin (tradenamed as MR-110, manufactured by Nippon Zeon Co., Ltd.) | 27 |
| Isocyanate compound (tradenamed as Coronate® 2298-90T, manufactured by Nippon Polyurethane Industry Co., Ltd.) | 3 |
| Tetrahydrofuran | 150 |

This coating liquid was coated on the adhesive layer, and dried to form a reversible thermosensitive recording layer of about 10 μm thick.

(Formation of protective layer)

The following components were mixed and dispersed to prepare a protective layer coating liquid.

| | |
|---|---|
| 75 % butyl acetate solution of urethane-acrylic type ultraviolet crosslinking resin (tradenamed as Unidick® C7-157, manufactured by Dainippon Ink and Chemicals Inc.) | 45 |
| Calcium carbonate | 3 |

(continued)

| Isopropyl alcohol | 45 |
|---|---|

The protective layer coating liquid was coated on the recording layer, dried, and then crosslinked upon application of ultraviolet light using an ultraviolet lamp of 120 W/cm. Thus, a protective layer of about 3.0 μm thick was formed.

(Formation of second adhesive layer)

On the other side of the polyester film, an adhesion improving layer of about 1 μm thick including a polyester resin. Then a polyester type adhesive was coated on the adhesion improving layer to form a second adhesive layer of 3 μm thick was formed.

Thus a reversible thermosensitive recording medium was prepared.

(Formation of card substrate)

A center core of a white polyvinyl chloride sheet having a thickness of 560 μm and two over sheets each made of a transparent polyvinyl chloride sheet having a thickness of 100 μm were laminated so that the over sheets sandwiched the center core. Thus a card substrate of 760 μm thick was prepared.

(Formation of thermosensitive recording card)

A magnetic recording portion made of a magnetic transfer tape having a magnetism of 650 Oe, and the reversible thermosensitive recording medium prepared above were formed on the card substrate, and then embedded therein by a hot lamination method under conditions of 100 °C in press temperature and 10 kg/cm$^2$ in pressure.

Thus a reversible thermosensitive recording card medium having a thermosensitive recording portion and an information storage medium was prepared.

The waviness (X) of surface of the thermosensitive recording portion was 0.045 mm when the scanning length was 10 mm, and the deformation quantity (Y) of the card medium was 1.0 mm. In this case, inequality (1) is satisfied ($|0.045| \leqq 0.075 \times 1.0^{1.4}$). In addition, the adhesion between the card substrate and the reversible thermosensitive recording medium was 350 g/cm.

When this card of the present invention was set in a card reader/writer for reversibly recording/erasing images thermally (tradenamed as R-3000, manufactured by Kyushu Matsushita Electric Co. , Ltd.), and images were recorded in the recording portion, the resultant images had good image qualities . When the images were erased, the images were clearly erased.

## Example 2

The procedure for preparation of the thermosensitive recording card in Example 1 was repeated except that the press temperature was 90 °C and the pressure was 20 kg/cm$^2$ in the hot-lamination process when the reversible thermosensitive recording medium was embedded in the card substrate. The waviness (X) of surface of the recording portion was 0.040 mm when the scanning length was 10 mm. The deformation quantity (Y) of the card medium was 1.0 mm. In this case, inequality (1) is satisfied ($|0.040| \leqq 0.075 \times 1.0^{1.4}$). In addition, the adhesion between the card substrate and the reversible thermosensitive recording medium was 250 g/cm.

When an image was once recorded in the recording portion by the card reader/writer R-3000, the image had a good image quality. In addition, when the image was erased, the image was clearly erased. However, when this image forming/erasing operation was repeated, the reversible thermosensitive recording medium is peeled from the card substrate, and therefore the image forming/erasing operation could not be further continued.

## Example 3

The procedure for preparation of the thermosensitive recording card in Example 1 was repeated except that the press temperature was 120 °C and the pressure was 10 kg/cm$^2$ in the hot-lamination process when the reversible thermosensitive recording medium was embedded in the card substrate. The waviness (X) of surface of the recording portion was 0.070 mm when the scanning length was 10 mm. The deformation quantity (Y) of the card medium was 1.0 mm. In this case, inequality (1) is satisfied ($|0.070| \leqq 0.075 \times 1.0^{1.4}$). In addition, the adhesion between the card substrate and the reversible thermosensitive recording medium was 400 g/cm.

When an image was recorded in the recording.portion by the card reader/writer R-3000, the image had a good image quality. In addition, when the image was erased, the image was clearly erased.

**Example 4**

The procedure for preparation of the thermosensitive recording card in Example 1 was repeated except that the formation of the reversible thermosensitive recording layer coating liquid was changed to the following, and that light reflection layer and an adhesive layer were not formed.

(Formation of reversible thermosensitive recording layer coating liquid)

The following components were pulverized and dispersed using a ball mill such that the particle diameter of the solid components in the liquid was from 1 to 4 $\mu$m, to prepare a leuco dye type reversible thermosensitive recording layer coating dispersion.

| | |
|---|---|
| 2-anilino-3-methyl-6-dibutylaminofluoran | 2 |
| Electron accepting compound having the following formula | 8 |
| (i.e., a color developer having a long chain alkyl group) | |

$$HO-\langle\bigcirc\rangle-NHCO-(CH_2)_5-NHCONH-(CH_2)_{11}CH_{13}$$

| | |
|---|---|
| 15 % phenoxy resin solution of tetrahydrofuran | 150 |
| (Phenoxy resin: PKHH manufactured by Union Carbide Corp.) | |

Twenty parts of an adduct type hexamethylene diisocyanate solution of ethyl acetate (Coronate® HL manufactured by Nippon Polyurethane Industry Co., Ltd., solid content of 75 %), were added to the above-prepared dispersion andmixed. Thus, a leuco dye type reversible thermosensitive recording layer coating liquid was prepared.

The waviness (X) of surface of the recording portion was 0.045 mm when the scanning length was 10 mm. The deformation quantity (Y) of the card medium was 1.0 mm. In this case, inequality (1) is satisfied ($|0.045| \leqq 0.075$ x $1.0^{1.4}$).

When an image was recorded in the recording area by the card reader/writer R-3000, the image had a good image quality. In addition, when the image was erased, the image was clearly erased.

**Example 5**

The procedure for preparation of the thermosensitive recording card in Example 3 was repeated except that the center core of the card substrate was replaced with a polyvinyl chloride sheet having a thickness of 400 $\mu$m. The thickness of the card substrate was 600 $\mu$m.

The waviness (X) of surface of the recording portion was 0.100 mm when the scanning length was 10 mm. The deformation quantity (Y) of the card medium was 2.0 mm. In this case, inequality (1) is satisfied ($|0.100| \leqq 0.075$ x $2.0^{1.4}$).

When an image was recorded in the recording area by the card reader/writer R-3000, the image had a good image quality. In addition, when the image was erased, the image was clearly erased.

**Example 6**

The procedure for preparation of the thermosensitive recording card in Example 1 was repeated except that the center core of the card substrate was replaced with a polyvinyl chloride sheet having a thickness of 800 $\mu$m. The thickness of the card substrate was 1000 $\mu$m.

The waviness (X) of surface of the recording portion was 0.007 mm when the scanning length was 10 mm. The deformation quantity (Y) of the card medium was 0.5 mm. In this case, inequality (1) is satisfied ($|0.007| \leqq 0.075 \times 0.5^{1.4}$).

When an image was recorded in the recording portion by the card reader/writer R-3000, the image had a good image quality. In addition, when the image was erased, the image was clearly erased.

### Example 7

The procedure for preparation of the thermosensitive recording card in Example 6 was repeated except that the press temperature was 120 °C and the pressure was 10 kg/cm$^2$ in the hot-lamination process when the reversible thermosensitive recording sheet was embedded in the card substrate. The waviness (X) of surface of the recording portion was 0.022 mm when the scanning length was 10 mm. The deformation quantity (Y) of the card medium was 0.5 mm. In this case, inequality (1) is satisfied ($|0.022| \leqq 0.075 \times 0.5^{1.4}$).

When an image was recorded in the recording portion by the card reader/writer R-3000, the image had a good image quality. In addition, when the image was erased, the image was clearly erased.

### Example 8

The procedure for preparation of the thermosensitive recording card in Example 4 was repeated except that the size of the reversible thermosensitive recording sheet was 65 mm x 45 mm.

The waviness (X) of surface of the recording portion was 0.050 mm when the scanning length was 10 mm. The deformation quantity (Y) of the card medium was 1.0 mm. In this case, inequality (1) is satisfied ($|0.050| \leqq 0.075 \times 1.0^{1.4}$).

When an image was recorded in the recording portion by the card reader/writer R-3000, the image had a good image quality. In addition, when the image was erased, the image was clearly erased.

### Comparative Example 1

The procedure for preparation of the thermosensitive recording card in Example 1 was repeated except that the press temperature was 120 °C and the pressure was 300 kg/cm$^2$ in the hot-lamination process when the reversible thermosensitive recording medium was embedded in the card substrate. The waviness (X) of surface of the recording portion was 0.080 mm when the scanning length was 10 mm. The deformation quantity (Y) of the card medium was 1.0 mm. In this case, inequality (1) is not satisfied ($|0.080| \geqq 0.075 \times 1.0^{1.4}$).

When an image was recorded in the recording portion by the card reader/writer R-3000, the resultant image had omissions. In addition, when the image was erased, the image was not clearly erased.

### Comparative Example 2

The procedure for preparation of the thermosensitive recording card in Example 5 was repeated except that the press temperature was 120 °C and the pressure was 10 kg/cm$^2$ in the hot-lamination process when the reversible thermosensitive recording medium was embedded in the card substrate. The resultant card was aged at 50 °C for 100 hours while the card was bent.

The waviness (X) of surface of the recording portion was 0.220 mm when the scanning length was 10mm. The deformation quantity (Y) of the card medium was 1.0 mm. In this case, inequality (1) is not satisfied ($|0.220| \geqq 0.075 \times 1.0^{1.4}$).

When an image was recorded in the recording portion by the card reader/writer R-3000, the resultant image had omissions. In addition, when the image was erased, the image was not clearly erased.

### Comparative Example 3

The procedure for preparation of the thermosensitive recording card in Example 6 was repeated except that the press temperature was 150 °C and the pressure was 10 kg/cm$^2$ in the hot-lamination process when the reversible thermosensitive recording medium was embedded in the card substrate.

The waviness (X) of surface of the recording portion was 0.040 mm when the scanning length was 10mm. The deformation quantity (Y) of the card medium was 0.5 mm. In this case, inequality (1) is not satisfied ($|0.040| \geqq 0.075 \times 0.5^{1.4}$).

When an image was recorded in the recording portion by the card reader/writer R-3000, the resultant image had omissions. In addition, when the image was erased, the image was not clearly erased.

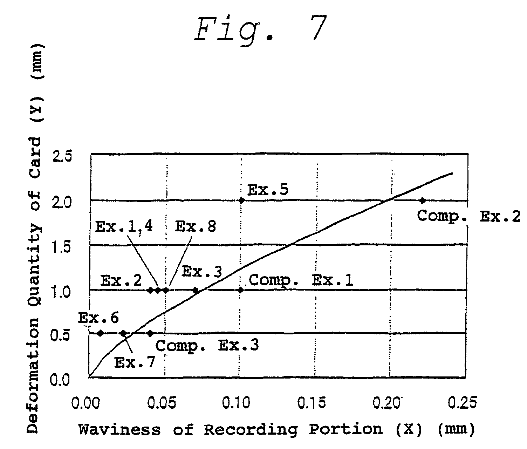

The relationship between the waviness of the recording portion and the deformation of the card substrate in each card medium of Examples 1 to 8 and Comparative Examples 1 to 3 is shown in Fig. 7.

As can be understood from the detailed and concrete description mentioned above, the thermosensitive recording card medium of the present invention can record images having good evenness and erase the images clearly.

## Claims

1. A thermosensitive recording card medium comprising a card substrate and a thermosensitive recording portion adhered by hot-lamination to at least one side of the card substrate, wherein the thermosensitive recording portion comprises a thermosensitive recording material which changes transparency and/or color upon application of heat to form an image in said recording portion, wherein the card medium has a deformation quantity not greater than 5 mm, and wherein the following relationship is satisfied:

$$|X| \leq 0.075 \cdot Y^{1.4}$$

wherein X represents the waviness of the recording portion and Y represents the deformation quantity of the card medium which are determined as follows:

### Deformation quantity

Two glass plates having a thickness of 10 mm are set so as to be parallel to each other with a space of 65 mm therebetween;
a card of 85 mm x 54 mm in size is set on the glass plates such that each of the shorter sides (54 mm) of the card are parallel to the glass plates and each edge part of the card contacts the respective glass plate by a length of 10 mm;
a force of 1 N is applied with a metal rod or a tension gauge having a metal rod to the center part of the card in a direction perpendicular to the card; and
the variation of the card is taken as the deformation quantity Y;

### Waviness

A surface of a card in which a thermosensitive recording portion is embedded is scanned with a surface analyzer such that the scanning length is 10 mm and the scanning direction is parallel to the short sides of the card;
the start point and the end point of the obtained curve (a) are connected with a straight line (b);
a dotted straight line (c) is drawn so that the line (c) is parallel to the line (b) and is a tangent line of the curve (a); and
the distance between the lines (b) and (c) is taken as the waviness X.

2. The thermosensitive recording card medium according to Claim 1, wherein the waviness of the thermosensitive recording portion is not greater than 70 μm.

3. The thermosensitive recording card medium according to Claim 1 or 2, wherein the difference in level between a surface of the thermosensitive recording portion and a surface of the card substrate is not greater than 50 μm.

4. The thermosensitive recording card medium according to any one of Claims 1 to 3, wherein the recording portion comprises a thermosensitive recording label comprising a support, a thermosensitive recording layer which is formed on one side of the support and which comprises the thermosensitive recording material, and an adhesive layer formed on the other side of the support.

5. The thermosensitive recording card medium according to Claim 4, wherein adhesion of the support with the card substrate is not less than 300 g/cm.

6. The thermosensitive recording card medium according to Claim 4 or 5, wherein the recording portion is provided by hot-laminating the thermosensitive recording label to the card substrate such that the adhesive layer contacts the card substrate, and wherein the hot-lamination is performed at a temperature of from 60 °C to 200 °C and at a pressure of from 10 kg/cm$^2$ to 50 kg/cm$^2$.

7.  The thermosensitive recording card medium according to Claims 6, wherein the recording label has a heat shrinkage percentage of 70 % to 130 % of a heat shrinkage percentage of the card substrate.

8.  The thermosensitive recording card medium according to Claim 6 or 7, wherein the card substrate has a thickness of from 750 μm to 1000 μm.

9.  The thermosensitive recording card medium according to any one of Claims 1 to 8, wherein the thermosensitive recording material comprises a reversible thermosensitive recording material which reversibly changes transparency and/or color upon application of heat.

10. The thermosensitive recording card medium according to any one of Claims 1 to 9, wherein the card further comprises an information storage portion on at least one side of the card substrate.

11. The thermosensitive recording card medium according to Claim 10, wherein the information storage portion is a medium selected from the group consisting of magnetic recording media, IC storage media; and optical storage media.

12. The thermosensitive recording card medium according to any one of Claims 1 to 11, wherein the card medium further comprises a print image.

13. The thermosensitive recording card medium according to any one of Claims 1 to 12, wherein the thermosensitive recording portion has an area of from 5 % to 90 % of the area of the side of the card substrate.

14. The thermosensitive recording card medium according to any one of Claims 1 to 13, wherein the thermosensitive recording portion has a thickness of from 1 % to 15 % of the thickness of the card substrate.

15. An image forming method comprising the steps of:

    providing a thermosensitive recording card medium comprising a card substrate and a thermosensitive recording portion formed at least on one side of the card substrate, and
    imagewise heating the thermosensitive recording portion to form an image therein,

    wherein the thermosensitive recording card medium is a card medium according to any one of Claims 1 to 14.

16. The image forming method according to Claim 15, wherein the imagewise heating step is performed with a thermal head.

17. The image forming method according to Claim 15, wherein the thermosensitive recording card medium is a card medium according to any one of Claims 9 to 14, and wherein the method further comprises a step of heating the thermosensitive recording portion to erase an image previously formed in the recording portion.

18. The image forming method according to Claim 17, wherein the imagewise heating step and the heating step are performed with a thermal head.

19. The image forming method according to Claim 18, wherein the imagewise heating step is performed while the heating step is performed.

20. The image forming method according to any one of Claims 16, 18 and 19, wherein the thermal head is pressed to the recording portion at a pressure of from 2 g/mm to 100 g/mm when the imagewise heating step and heating step are performed.

21. The image forming method according to Claim 17, wherein the heating step is performed with a ceramic heater or a heat roller.

22. The image forming method according to Claim 21, wherein the heating step is performed by a ceramic heater, and wherein the ceramic heater is pressed to the recording portion at a pressure of from 0.1 g/mm to 100 g/mm.

**23.** An.image displaying method comprising the steps of:

> providing a thermosensitive recording card medium comprising a card substrate and a thermosensitive recording portion formed on at least one side of the card substrate, and an information storage portion which is formed on at least one side of the card substrate and which stores information therein; and
> recording at least a part of the information stored in the information storage portion in the thermosensitive recording portion upon application of heat,

> wherein the thermosensitive recording card medium is a card medium according to any one of Claims 10 to 14.

**Patentansprüche**

**1.** Wärmeempfindliches Karten-Aufzeichnungsmedium umfassend ein Kartensubstrat und einen wärmeempfindlichen Aufzeichnungsabschnitt, der an mindestens einer Seite des Kartensubstrats durch Heißlaminierung aufgebracht ist, wobei der wärmeempfindliche Aufzeichnungsabschnitt ein wärmeempfindliches Aufzeichnungsmaterial umfasst, welches die Transparenz und/oder die Farbe bei Wärmeeinwirkung unter Erzeugung eines Bildes in dem Aufzeichnungsabschnitt ändert und wobei das Kartenmedium ein Deformationsmaß von nicht mehr als 5 mm aufweist und wobei die folgende Beziehung erfüllt ist:

$$|X| \leq 0{,}075 \cdot Y^{1,4}$$

worin X die Welligkeit des Aufzeichnungsabschnitts darstellt und Y das Deformationsmaß des Kartenmediums darstellt, die folgendermaßen bestimmt werden:

Deformationsmaß:

> Zwei Glasplatten mit einer Dicke von 10 mm werden parallel zueinander mit einem Abstand von 65 mm dazwischen ausgerichtet;
> eine Karte mit einer Größe von 85 mm x 54 mm wird auf die Glasplatten platziert, so dass jede der kürzeren Seiten (54 mm) der Karte parallel zu den Glasplatten ist und jedes Randstück der Karte die betreffende Glasplatte mit einer Länge von 10 mm kontaktiert;
> eine Kraft von 1 N wird mit einem Metallstab oder einem Zugmessgerät mit einem Metallstab auf den Mittelteil der Karte in senkrechter Richtung zur Karte ausübt und
> die Variation der Karte wird als Deformationsmaß Y genommen;

Welligkeit

> Eine Oberfläche einer Karte, in die ein wärmeempfindlicher Aufzeichnungsabschnitt eingebettet ist, wird mit einem Oberflächenanalysegerät derart abgetastet, dass die Abtastlänge 10 mm ist und die Abtastrichtung parallel zu den kurzen Seiten der Karte ist,
> der Startpunkt und der Endpunkt der erhaltenen Kurve (a) werden mit einer geraden Linie (b) verbunden,
> eine punktierte. gerade Linie (c) wird gezogen, so dass die Linie (c) parallel zur Linie (b) ist und eine Tangentenlinie der Kurve (a) ist, und
> der Abstand zwischen den Linien (b) und (c) wird als Welligkeit X genommen.

**2.** Wärmeempfindliches Karten-Aufzeichnungsmedium nach Anspruch 1, worin die Welligkeit des wärmeempfindlichen Aufzeichnungsabschnitts nicht größer als 70 μm ist.

**3.** Wärmeempfindliches Karten-Aufzeichnungsmedium nach Anspruch 1 oder 2, worin der Höhenunterschied zwischen der Oberfläche des wärmeempfindlichen Aufzeichnungsabschnitts und der Oberfläche des Kartensubstrats nicht größer als 50 μm ist.

**4.** Wärmeempfindliches Karten-Aufzeichnungsmedium nach irgendeinem derAnsprüche 1 bis 3, worin der Aufzeichnungsabschnitt umfasst ein wärmeempfindliches Aufzeichnungsetikett umfassend einen Träger, eine wärmeempfindliche Aufzeichnungsschicht, die auf einer Seite des Trägers gebildet ist und weiche das wärmeempfindliche Aufzeichnungsmaterial umfasst, und eine Klebschicht, die auf der anderen Seite des Trägers gebildet ist.

5. Wärmeempfindliches Karten-Aufzeichnungsmedium nach Anspruch 4, worin die Haftfestigkeit des Trägers an dem Kartensubstrat nicht weniger als 300 g/cm beträgt.

6. Wärmeempfindliches Karten-Aufzeichnungsmedium nach Anspruch 4 oder 5, worin der Aufzeichnungsabschnitt durch Heißlaminieren des wärmeempfindlichen Aufzeichnungsetiketts auf das Kartensubstrat aufgebracht wird, so dass die Klebschicht das Kartensubstrat kontaktiert, und worin die Heißlaminierung bei einer Temperatur von 60 bis 200°C und einem Druck von 10 kg/cm$^2$ bis 50 kg/cm$^2$ erfolgt.

7. Wärmeempfindliches Karten-Aufzeichnungsmedium nach Anspruch 6, worin das Aufzeichnungsetikett eine prozentuale Wärmeschrumpfung von 70 bis 130% der prozentualen Wärmeschrumpfung des Kartensubstrats aufweist.

8. Wärmeempfindliches Karten-Aufzeichnungsmedium nach Anspruch 6 oder 7, worin das Kartensubstrat eine Dicke von 750 μm bis 1.000 μm aufweist.

9. Wärmeempfindliches Karten-Aufzeichnungsmedium nach irgendeinem der Ansprüche 1 bis 8, worin das wärmeempfindliche Aufzeichnungsmaterial ein reversibles wärmeempfindliches Aufzeichnungsmaterial umfasst, welches die Transparenz und/oder die Farbe bei Wärmeeinwirkung reversibel ändert.

10. Wärmeempfindliches Karten-Aufzeichnungsmedium nach irgendeinem der Ansprüche 1 bis 9, worin die Karte ferner einen Informationsspeicherabschnitt auf mindestens einer Seite des Kartensubstrats umfasst.

11. Wärmeempfindliches Karten-Aufzeichnungsmedium nach Anspruch 10, worin der Informationsspeicherabschnitt ein Medium ist, das aus der Gruppe bestehend aus magnetischen Aufzeichnungsmedien, IC-Speichermedien und optischen Speichermedien ausgewählt ist.

12. Wärmeempfindliches Karten-Aufzeichnungsmedium nach irgendeinem der Ansprüche 1 bis 11, worin das Kartenmedium ferner ein Druckbild umfasst.

13. Wärmeempfindliches Karten-Aufzeichnungsmedium nach irgendeinem der Ansprüche 1 bis 12, worin der wärmeempfindliche Aufzeichnungsabschnitt eine Fläche von 5 bis 90% der Fläche der Seite des Kartensubstrats aufweist.

14. Wärmeempfindliches Karten-Aufzeichnungsmedium nach irgendeinem der Ansprüche 1 bis 13, worin der wärmeempfindliche Aufzeichnungsabschnitt eine Dicke von 1 bis 15% der Dicke des Kartensubstrats aufweist.

15. Bildaufzeichnungsverfahren umfassend die Schritte:

Bereitstellen eines wärmeempfindlichen Karten-Aufzeichnungsmediums umfassend ein Kartensubstrat und einen wärmeempfindlichen Aufzeichnungsabschnitt, der zumindest auf einer Seite des Kartensubstrats gebildet ist, und
bildmäßiges Erwärmen des wärmeempfindlichen Aufzeichnungsabschnitts unter Erzeugung eines Bildes darin,

wobei das wärmeempfindliche Karten-Aufzeichnungsmedium ein Kartenmedium nach irgendeinem der Ansprüche 1 bis 14 ist.

16. Bildaufzeichnungsverfahren nach Anspruch 15, worin der Schritt des bildmäßigen Erwärmens mit einem Thermokopf durchgeführt wird.

17. Bildaufzeichnungsverfahren nach Anspruch 15, worin das wärmeempfindliche Karten-Aufzeichnungsmedium ein Kartenmedium nach irgendeinem der Ansprüche 9 bis 14 ist und worin das Verfahren ferner einen Schritt zum Erwärmen des wärmeempfindlichen Aufzeichnungsabschnitts umfasst, um ein vorher im Aufzeichnungsabschnitt erzeugtes Bild zu löschen.

18. Bildaufzeichnungsverfahren nach Anspruch 17, worin der Schritt des bildmäßigen Erwärmens und der Erwärmungsschritt mit einem Thermokopf durchgeführt werden.

**19.** Bildaufzeichnungsverfahren nach Anspruch 18, worin der Schritt des bildmäßigen Erwärmens durchgeführt wird, während der Erwärmungsschritt durchgeführt wird.

**20.** Bildaufzeichnungsverfahren nach irgendeinem der Ansprüche 16, 18 und 19, worin der Thermokopf mit einem Druck von 2 g/mm bis 100 g/mm auf den Aufzeichnungsabschnitt gedrückt wird, wenn der Schritt des bildmäßigen Erwärmens und der Erwärmungsschritt durchgeführt werden.

**21.** Bildaufzeichnungsverfahren nach Anspruch 17, worin der Erwärmungsschritt mit einem Keramik-Heizgerät oder einer Heizwalze durchgeführt wird.

**22.** Bildaufzeichnungsverfahren nach Anspruch 21, worin der Erwärmungsschritt durch ein Keramik-Heizgerät durchgeführt wird und das Keramik-Heizgerät mit einem Druck von 0,1 g/mm bis 100 g/mm auf den Aufzeichnungsabschnitt gedrückt wird.

**23.** Bildanzeigeverfahren umfassend die Schritte:

Bereitstellen eines wärmeempfindlichen Karten-Aufzeichnungsmediums umfassend ein Kartensubstrat und einen wärmeempfindlichen Aufzeichnungsabschnitt, der zumindest auf einer Seite des Kartensubstrats gebildet ist, und einen Informationsspeicherabschnitt, der auf mindestens einer Seite des Kartensubstrats gebildet ist und welcher Information speichert, und
Aufzeichnen mindestens eines Teils der im Informationsspeicherabschnitt gespeicherten Information im wärmeempfindlichen Aufzeichnungsabschnitt durch Wärmeeinwirkung,

worin das wärmeempfindliche Karten-Aufzeichnungsmedium ein Kartenmedium nach irgendeinem der Ansprüche 10 bis 14 ist.


**Revendications**

**1.** Carte d'enregistrement thermosensible comprenant un substrat de carte et une partie d'enregistrement thermosensible collée par stratification à chaud sur au moins un côté du substrat de carte, dans laquelle la partie d'enregistrement thermosensible comprend un matériau d'enregistrement thermosensible dont la transparence et/ou la couleur change lors de l'application de chaleur pour former une image dans ladite partie d'enregistrement, dans laquelle la carte présente une quantité de déformation inférieur ou égale à 5 mm, et dans laquelle la relation suivante est satisfaite :

$$|X| \leq 0,075 \cdot Y^{1.4}$$

où X représente l'ondulation de la partie d'enregistrement et Y représente la quantité de déformation de la carte qui sont déterminées de la façon suivante :

Quantité de déformation

deux plaques de verre ayant une épaisseur de 10 mm sont placées parallèlement l'une à l'autre avec un espace de 65 mm entre elles ;
une carte de 85 mm x .54 mm est placée sur les plaques de verre de telle manière que les petits côtés (54 mm) de la carte sont tous deux parallèles aux plaques de verre et chaque partie de bord de la carte est en contact avec la plaque de verre respective sur une longueur de 10 mm ;
une force de 1 N est appliquée, à l'aide d'une tige métallique ou d'une jauge de traction comportant une tige métallique, à la partie centrale de la carte dans une direction perpendiculaire à la carte ; et
la variation de la carte est prise comme la quantité de déformation Y ;

Ondulation

on balaie la surface d'une carte dans laquelle est incorporée une partie d'enregistrement thermosensible à l'aide d'un analyseur de surface de telle manière que la longueur de balayage vaut 10 mm et la direction de balayage est parallèle aux petits côtés de la carte ;

on relie le point de départ et le point final de la courbe obtenue (a) par une ligne droite (b) ;
on trace une ligne droite pointillée (c) de telle manière que la ligne (c) est parallèle à la ligne (b) et est tangente à la courbe (a) ; et
on prend la distance séparant les lignes (b) et (c) comme étant l'ondulation X.

2. Carte d'enregistrement thermosensible selon la revendication 1, dans laquelle l'ondulation de la partie d'enregistrement thermosensible est inférieure ou égale à 70 μm.

3. Carte d'enregistrement thermosensible selon la revendication 1 ou 2, dans laquelle la différence de niveau entre une surface de la partie d'enregistrement thermosensible et une surface du substrat de la carte est inférieure ou égale à 50 μm.

4. Carte d'enregistrement thermosensible selon l'une quelconque des revendications 1 à 3, dans laquelle la partie d'enregistrement comprend une étiquette d'enregistrement thermosensible comprenant un support, une couche d'enregistrement thermosensible qui est formée sur un côté du support et qui comprend le matériau d'enregistrement thermosensible, et une couche adhésive formée sur l'autre côté du support.

5. Carte d'enregistrement thermosensible selon la revendication 4, dans laquelle la force d'adhésion du support avec le substrat de la carte est supérieure ou égale à 300 g/cm.

6. Carte d'enregistrement thermosensible selon la revendication 4 ou 5, dans laquelle la partie d'enregistrement est fournie en stratifiant à chaud l'étiquette d'enregistrement thermosensible sur le substrat de la carte de telle manière que la couche adhésive touche le substrat de la carte, et dans laquelle la stratification à chaud est exécutée à une température comprise entre 60 °C et 200 °C et à une pression comprise entre 10 kg/cm$^2$ et 50 kg/cm$^2$.

7. Carte d'enregistrement thermosensible selon la revendication 6, dans laquelle le pourcentage de retrait thermique de l'étiquette d'enregistrement représente de 70 % à 130 % du pourcentage de retrait thermique du substrat de la carte.

8. Carte d'enregistrement thermosensible selon la revendication 6 ou 7, dans laquelle le substrat de la carte a une épaisseur comprise entre 750 μm et 1 000 μm.

9. Carte d'enregistrement thermosensible selon l'une quelconque des revendications 1 à 8, dans laquelle le matériau d'enregistrement thermosensible comprend un matériau d'enregistrement thermosensible réversible qui change de transparence et/ou de couleur, de façon réversible, lors de l'application de chaleur.

10. Carte d'enregistrement thermosensible selon l'une quelconque des revendications 1 à 9, dans laquelle la carte comprend en outre une partie de stockage d'information sur au moins un côté du substrat de carte.

11. Carte d'enregistrement thermosensible selon la revendication 10, dans laquelle la partie de stockage d'information est un support choisi dans l'ensemble constitué par les supports d'enregistrement magnétique, les supports de stockage à CI, et les supports de stockage optique.

12. Carte d'enregistrement thermosensible selon l'une quelconque des revendications 1 à 11, dans laquelle la carte comprend en outre une image imprimée.

13. Carte d'enregistrement thermosensible selon l'une quelconque des revendications 1 à 12, dans laquelle l'aire de la partie d'enregistrement thermosensible représente de 5 % à 90 % de l'aire du côté du substrat de la carte.

14. Carte d'enregistrement thermosensible selon l'une quelconque des revendications 1 à 13, dans laquelle l'épaisseur de la partie d'enregistrement thermosensible représente de 1 % à 15 % de l' épaisseur du substrat de la carte.

15. Procédé de formation d'image comprenant les étapes consistant à :

prendre une carte d'enregistrement thermosensible comprenant un substrat de carte et une partie d'enregistrement thermosensible formée sur au moins un côté du substrat de carte, et
chauffer en image la partie d'enregistrement thermosensible afin d' y former une image,

dans lequel la carte d'enregistrement thermosensible est une carte conforme à l'une quelconque des revendications 1 à 14.

**16.** Procédé de formation d'image selon la revendication 15, dans lequel l'étape de chauffage en image est exécutée avec une tête thermique.

**17.** Procédé de formation d'image selon la revendication 15, dans lequel la carte d'enregistrement thermosensible est une carte conforme à l'une quelconque des revendications 9 à 14, et dans lequel le procédé comprend en outre une étape consistant à chauffer la partie d'enregistrement thermosensible pour effacer une image précédemment formée dans la partie d'enregistrement.

**18.** Procédé de formation d'image selon la revendication 17, dans lequel l'étape de chauffage en image et l'étape de chauffage sont exécutées avec une tête thermique.

**19.** Procédé de formation d'image selon la revendication 18, dans lequel l'étape de chauffage en image est exécutée en même temps que l'étape de chauffage.

**20.** Procédé de formation d'image selon l'une quelconque des revendications 16, 18 et 19, dans lequel la tête thermique est pressée contre la partie d'enregistrement avec une pression comprise entre 2 g/mm et 100 g/mm lors de l'exécution de l'étape de chauffage en image et de l'étape de chauffage.

**21.** Procédé de formation d'image selon la revendication 17, dans lequel l'étape de chauffage est exécutée avec un dispositif de chauffage en céramique ou un rouleau chauffant.

**22.** Procédé de formation d'image selon la revendication 21, dans lequel l'étape de chauffage est exécutée au moyen d'un dispositif de chauffage en céramique, et dans lequel le dispositif de chauffage en céramique est pressé contre la partie d'enregistrement avec une pression comprise entre 0,1 g/mm et 100 g/mm.

**23.** Procédé d'affichage d'image comprenant les étapes consistant à :

prendre une carte d'enregistrement thermosensible comprenant un substrat de carte et une partie d'enregistrement thermosensible formée sur au moins un côté du substrat de carte, et une partie de stockage d'information qui est formée sur au moins un côté du substrat de carte et qui y stocke des informations ; et
enregistrer au moins une partie des informations stockées dans la partie de stockage d'information dans la partie d'enregistrement thermosensible lors de l'application de chaleur,

dans lequel la carte d'enregistrement thermosensible est une carte conforme à l'une quelconque des revendications 10 à 14.

## Fig. 1-A

## Fig. 1-B

*Fig. 1-C*

*Fig. 1-D*

## Fig. 2-A

## Fig. 2-B

Fig. 3-A

G2

G1

1

Fig. 3-B

M

1

10mm

10mm

65mm

G2

G1

Fig. 3-C

M

1

G2

G1

Y

# Fig. 4

# Fig. 5-A

# Fig. 5-B

Fig. 6-A

Fig. 6-B

Fig. 6-C

Fig. 6-D

# Fig. 7